# FASCICULE DE BREVET EUROPEEN

(11) **EP 2 649 018 B1**
(45) Date de publication et mention de la délivrance du brevet: **26.07.2017**
(21) Numéro de dépôt: 11794463.7
(22) Date de dépôt: 06.12.2011
(51) Int. Cl.: C03B 19/06, C03B 32/02, C03C 3/32, C03C 10/00

(54) **PROCEDE D'OBTENTION D'UN MATERIAU VITROCERAMIQUE ET OPTIQUEMENT TRANSPARENT DANS L'INFRAROUGE**
VERFAHREN ZUR HERSTELLUNG EINES IM INFRAROTBEREICH OPTISCH TRANSPARENTEN GLASKERAMIKMATERIALS
PROCESS FOR OBTAINING A GLASS-CERAMIC MATERIAL THAT IS OPTICALLY TRANSPARENT IN THE INFRARED

(30) Priorité: 06.12.2010 FR 1060133
(43) Date de publication de la demande: 16.10.2013
(73) Titulaire: CNRS, 75016 Paris (FR); Université de Rennes I, 35065 Rennes Cedex (FR)
(72) Inventeur: CALVEZ, Laurent, F-35235 Thorigne-fouillard (FR); ZHANG, Xiang Hua, F-35510 Cesson Sevigne (FR); HUBERT, Mathieu, F-35250 Chasne Sur Illet (FR); DELAIZIR, Gaëlle, F-87000 Limoges (FR)
(74) Mandataire: Vidon Brevets & Stratégie
(86) Numéro de dépôt international: PCT/EP2011/071925
(87) Numéro de publication internationale: WO 2012/076527

(56) Documents cités:
- FR-A1- 2 857 354
- US-A- 5 108 477
- US-A- 5 634 956
- TANI Y ET AL: "Crystalline-amorphous transitions of Ge-Se alloys by mechanical grinding", JOURNAL OF NON-CRYSTALLINE SOLIDS, NORTH-HOLLAND PHYSICS PUBLISHING. AMSTERDAM, NL, vol. 293-295, 1 novembre 2001 (2001-11-01) , pages 779-784, XP004320719, ISSN: 0022-3093, DOI: DOI:10.1016/S0022-3093(01)00788-8
- MA H ET AL: "Infrared transmitting chalcogenide glass ceramics", JOURNAL OF NON-CRYSTALLINE SOLIDS, NORTH-HOLLAND PHYSICS PUBLISHING. AMSTERDAM, NL, vol. 317, no. 3, 1 mars 2003 (2003-03-01), pages 270-274, XP004409703, ISSN: 0022-3093, DOI: 10.1016/S0022-3093(02)01819-7
- ZHANG X ET AL: "A new class of infrared transmitting glass-ceramics based on controlled nucleation and growth of alkali halide in a sulphide based glass matrix", JOURNAL OF NON-CRYSTALLINE SOLIDS, NORTH-HOLLAND PHYSICS PUBLISHING. AMSTERDAM, NL, vol. 337, no. 2, 1 juillet 2004 (2004-07-01), pages 130-135, XP004516341, ISSN: 0022-3093, DOI: 10.1016/J.JNONCRYSOL.2004.03.119
- Gaelle Delaizir ET AL: "Spark Plasma Sintering: An Easy Way to Make Infrared Transparent Glass-Ceramics", Journal of the American Ceramic Society, vol. 93, no. 9, 2 September 2010 (2010-09-02), pages 2495-2498, XP055114510, ISSN: 0002-7820, DOI: 10.1111/j.1551-2916.2010.03830.x
- FUKUNAGA T ET AL: "The structure of amorphous Se-S prepared by mechanical alloying", JOURNAL OF NON-CRYSTALLINE SOLIDS, NORTH-HOLLAND PHYSICS PUBLISHING. AMSTERDAM, NL, vol. 232-234, 11 July 1998 (1998-07-11), pages 465-469, XP027350757, ISSN: 0022-3093 [retrieved on 1998-07-11]
- ITOH K ET AL: "Structure of amorphous P-Se prepared by mechanical alloying", JOURNAL OF NON-CRYSTALLINE SOLIDS, NORTH-HOLLAND PHYSICS PUBLISHING. AMSTERDAM, NL, vol. 312-314, 1 October 2002 (2002-10-01), pages 561-565, XP004382760, ISSN: 0022-3093, DOI: 10.1016/S0022-3093(02)01772-6
- SHEN T D ET AL: "FORMATION OF AMORPHOUS GE-S SEMICONDUCTOR ALLOYS BY MECHANICAL ALLOYING", APPLIED PHYSICS LETTERS, AMERICAN INSTITUTE OF PHYSICS, US, vol. 63, no. 12, 20 September 1993 (1993-09-20), pages 1637-1639, XP000395939, ISSN: 0003-6951, DOI: 10.1063/1.110720

## Description

### 1. DOMAINE DE L'INVENTION

Le domaine de l'invention est celui des matériaux optiques destinés à la transmission de rayonnements électromagnétiques infrarouges.

Plus précisément, l'invention concerne une technique d'obtention d'un matériau vitrocéramique, à base de chalcogénures et possédant une transparence à un rayonnement infrarouge.

De tels matériaux ont de nombreuses applications, entre autres dans le domaine de l'imagerie thermique, en particulier pour la conception de composants optiques passifs pour des systèmes infrarouges (caméras thermiques, capteurs thermiques, ...), ou pour la fabrication de composants optiques actifs utilisant des propriétés optiques d'émission ou de non linéarité comme les dispositifs lasers infrarouges, les commutateurs optiques, ou encore les amplificateurs optiques par exemple.

### 2. ARRIÈRE-PLAN TECHNOLOGIQUE

Les verres de chalcogénures, utilisés comme matériaux pour la transmission dans l'infrarouge, constituent de nos jours une alternative économiquement intéressante au germanium monocristallin dans le cadre de la fabrication d'éléments optiques massifs fonctionnant dans l'infrarouge.

Une technique d'élaboration de verres de chalcogénures bien connue de l'Homme du Métier, présentée dans l'article scientifique « Production of complex chalcogenide glass optics by molding for thermal imaging » (Journal of Non-Crystalline Solids, vol. 326&327 (2003), p. 519-523 - X. H. Zhang, Y. Guimond, Y. Bellec) ou dans le document de brevet FR 2857354, repose sur l'utilisation d'un tube de silice. Cette technique comprend principalement les étapes suivantes :
- introduire, dans un tube de silice et dans les proportions stoechiométriques souhaitées, les éléments de départ nécessaires à la synthèse d'un verre de chalcogénures et sceller ledit tube sous vide ;
- chauffer, pendant plusieurs heures, le tube de silice au-dessus de la température de fusion (notée T_{f} par la suite) de l'élément principal ou des éléments principaux de départ, T_{f} pouvant varier entre 700 et 1000°C par exemple ;
- réaliser une trempe thermique du tube de silice à l'eau ou à l'air, de manière à obtenir un verre ;
- extraire, après refroidissement, le verre du tube de silice.

La synthèse des verres de chalcogénures en tube de silice est donc une technique contraignante et coûteuse. En effet, cette technique connue présente un certain nombre d'inconvénients, développés ci-après.

Tout d'abord, la mise en oeuvre d'un cycle thermique à très haute température pendant des heures entraîne une forte consommation en énergie et donc un coût de production des verres relativement élevé.

Ensuite, l'étape d'extraction du verre du tube de silice nécessitant très fréquemment une découpe du tube de silice, celle-ci conduit irrémédiablement à la détérioration du tube de silice. Ainsi, une fois le verre synthétisé, le tube de silice n'est plus réutilisable, ce qui augmente le coût de revient des verres. De plus, afin d'obtenir un diamètre idéal pour une application souhaitée, les verres sont extraits d'un verre préalablement synthétisé par une opération de carottage par exemple (avec perte de matière ou de pureté initiale si recyclage).

Un autre inconvénient lié au processus d'amorphisation thermique réside dans le fait que les tubes de silice présentent une conductivité thermique relativement faible, limitant l'étendue des compositions vitreuses envisageables à la synthèse, d'une part, et la taille des verres fabriqués, d'autre part. En effet, la faible conductivité thermique des tubes de silice empêche d'obtenir des vitesses de trempe suffisamment élevées nécessaires à l'élaboration de certaines compositions vitreuses, en particulier pour des verres peu stables face à la cristallisation et de grands diamètres.

On rappelle qu'un verre est considéré comme peu stable face à la cristallisation lorsque la différence entre la température de transition vitreuse T_{g} et la température de cristallisation (notée Tₓ par la suite) de celui-ci est inférieure à 100°C. Ainsi, lorsqu'une trempe thermique est réalisée, le gradient de température apparaissant au sein du « matériau trempé » peut favoriser une réorganisation des molécules dans la partie la plus éloignée des parois du tube de silice, et donc une cristallisation. Pour la même raison, plus le diamètre du tube de silice est important, plus grand est le risque que le matériau massif formé au final présente un état cristallin.

Une technique alternative d'obtention d'un matériau vitrocéramique est également divulguée dans l'article scientifique « Spark Plasma Sintering : An Easy Way to make Infrared Transparent Glass-Ceramics » (G. Delaizir et al., J. Am. Ceram. Soc., 93 [9] 2495-2498 (2010).

Des techniques d'amorphisation par mécanosynthèse ont également été divulguées, notamment dans les articles scientifiques : « The structure of amorphous SeS prepared by mechanical alloying » (T. Fukunaga et al., Journal of Non-Crystalline Solids, 232-234 (1998) 465-469); « Structure of amorphous P-Se prepared by mechanical alloying » (K. Itoh et al., Journal of Non-Crystaline Solids, 312-314 (2002) 561-565) ; « Formation of amorphous Ge-S semiconductor alloys by mechanical alloying » (T. D. Shen et al., Applied Physics Letters, (63) 12, 20 September 1993)

Il apparaît donc particulièrement intéressant de pouvoir synthétiser un matériau vitrocéramique, à base de chalcogénures, de manière relativement simple et peu coûteuse, sans pour autant limiter la taille du matériau synthétisé, ni l'étendue des compositions.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique d'obtention d'un matériau vitrocéramique et optiquement transparent au rayonnement infrarouge, qui soit simple et peu coûteuse à mettre en oeuvre.

Un autre objectif d'au moins un mode de réalisation de l'invention est de fournir une telle technique qui ne limite pas l'élaboration de matériaux vitreux uniquement à des matériaux stables face à la cristallisation. En d'autres termes, cet objectif est de s'affranchir du caractère d'instabilité de certaines compositions vitreuses face à la cristallisation, et donc d'élaborer de nouvelles compositions vitreuses exploitables dans l'industrie.

Au moins un mode de réalisation de l'invention a également pour objectif de fournir une telle technique qui ne présente aucune contrainte quant aux dimensions du matériau vitrocéramique élaboré.

### 4. EXPOSÉ DE L'INVENTION

Dans un mode de réalisation particulier de l'invention, il est proposé un procédé d'obtention d'un matériau vitrocéramique et optiquement transparent à un rayonnement infrarouge, un tel procédé comprenant en particulier les étapes suivantes :
- amorphisation, par mécanosynthèse, d'un ensemble d'éléments de départ comprenant au moins un élément métallique et au moins un élément chalcogénure, permettant de former une poudre amorphe ;
- densification à chaud, dans un dispositif de moulage de dimensions prédéterminées, de la poudre amorphe, permettant d'obtenir, après refroidissement, un verre massif.

Le principe général de ce mode de réalisation consiste donc à élaborer un matériau vitrocéramique massif et optiquement transparent à un rayonnement infrarouge dont le processus d'amorphisation est réalisé par mécanosynthèse, c'est-à-dire par apport d'énergie mécanique, à basse température, conduisant à la formation d'une poudre amorphe. Le matériau vitreux est mis en forme au moyen d'un mécanisme de densification à chaud, dans un dispositif de moulage, de la poudre amorphe préalablement formée, les dimensions de celui-ci étant fonction des dimensions du dispositif de moulage.

Ainsi, ce mode de réalisation particulier de l'invention repose sur une approche tout à fait nouvelle et inventive consistant à réaliser, par mécanosynthèse, une modification de la structure cristallographique passant d'un état cristallin (éléments de départ) à un état non-cristallin (poudre amorphe), afin d'obtenir un matériau vitreux. Ainsi, au lieu d'élaborer un matériau vitreux à l'aide d'un processus d'amorphisation thermique qui nécessite un traitement thermique à très haute température suivie d'une trempe au moyen d'un tube de silice, la présente invention repose sur un processus d'amorphisation mécanique réalisé à température ambiante. Un tel processus est donc beaucoup moins consommateur en énergie et plus simple à mettre en oeuvre.

Par ailleurs, en s'affranchissant des inconvénients liés à l'utilisation d'un tube de silice, les compositions chimiques permettant d'aboutir à des matériaux vitreux exploitables ne sont plus limitées uniquement à des matériaux stables face à la cristallisation et peuvent être étendues à tout type de matériaux vitreux y compris à des matériaux vitreux jusqu'alors impossibles à élaborer.

De plus, le processus d'amorphisation mécanique n'offre aucune contrainte quant à la taille maximale du matériau vitrocéramique pouvant être obtenue au final, si ce n'est les dimensions du moule usité pour l'étape de densification à chaud. Selon une variante de l'invention, ladite étape de densification à chaud est suivie d'une étape de traitement thermique dans laquelle ledit matériau vitreux massif obtenu est chauffé à une température à laquelle une partie dudit verre obtenu est convertie depuis un état amorphe en un état sensiblement cristallin, permettant d'obtenir, après refroidissement, une vitrocéramique.

Une vitrocéramique est donc obtenue par traitement thermique spécifique d'un verre de même composition mais qui est exempt de cristaux, c'est-à-dire présentant un état non-cristallin. Une vitrocéramique se présente donc sous la forme d'une matrice vitreuse (état amorphe) dans laquelle sont répartis de manière homogène des cristaux ou des nanocristaux. Combinant les avantages des céramiques et des verres, elle permet d'améliorer les propriétés mécaniques et thermiques du matériau vitreux tout en conservant sa capacité de transparence dans le spectre infrarouge.

Le procédé comprend selon une variante de invention une étape de traitement thermique, réalisée au cours de ladite étape de densification à chaud, dans laquelle ledit verre massif obtenu est chauffé à une température à laquelle une partie dudit verre massif obtenu est convertie depuis un état amorphe en un état sensiblement cristallin, permettant d'obtenir, après refroidissement, une vitrocéramique.

Le traitement thermique étant réalisé en même temps que l'étape de densification à chaud, le temps nécessaire pour obtenir une vitrocéramique est optimisé.

Selon une caractéristique avantageuse, ledit au moins un élément métallique appartient au groupe comprenant Ge, As, Sb, Ga, Sn, In, avec une teneur comprise entre 0 et 35% molaire, et ledit au moins un élément chalcogénure appartient au groupe comprenant S, Se, Te, avec une teneur comprise entre 40 et 90% molaire.

Ces éléments de départs permettent d'élaborer une vitrocéramique pour la conception de composants utilisant des propriétés optiques passifs (tels que des lentilles infrarouges par exemple).

Avantageusement, ledit ensemble d'éléments de départ comprend en outre au moins un élément appartenant au groupe comprenant :
- une terre-rare de type Er, Nd, Dy, Yb, Tm, Gd, Tb, Ce, Pr, Sm, avec une teneur comprise entre 0 et 15% molaire ;
- un halogénure d'alcalin de type CsX, KX, NaX, LiX, avec une teneur comprise entre 0 et 60% molaire, X représentant au moins un atome de Cl, Br, I, F ;
- un métal de type Cu, Pb, Bi, Cd, Cr, Ag, avec une teneur comprise entre 0 et 20% molaire.

Ces éléments de départs permettent d'élaborer des vitrocéramiques pour la conception de composants fonctionnant selon des propriétés optiques actives (tels que des sources lasers ou amplificateurs optiques par exemple).

De façon avantageuse, ladite étape de densification à chaud est effectuée par pressage uniaxial.

Cette technique est simple et peu coûteuse à mettre en oeuvre.

Selon une variante de réalisation, ladite étape de densification à chaud est effectuée par pressage isostatique.

Cette technique est également simple et peu coûteuse à mettre en oeuvre.

Selon une autre variante de réalisation, ladite étape de densification à chaud est effectuée selon une technique par plasma d'arc (aussi appelée technique SPS).

Cette technique permet d'optimiser encore plus le temps nécessaire à l'obtention d'un matériau vitrocéramique.

Dans un autre mode de réalisation (pas selon l'invention), il est proposé un dispositif optique comprenant un matériau vitrocéramique et optiquement transparent à un rayonnement infrarouge obtenu selon le procédé précité (dans l'un quelconque de ses différents modes de réalisation), un tel dispositif optique fonctionnant dans une gamme de longueurs d'onde infrarouges comprises entre 400 nm et 25 *µ*m.

### 5. LISTE DES FIGURES

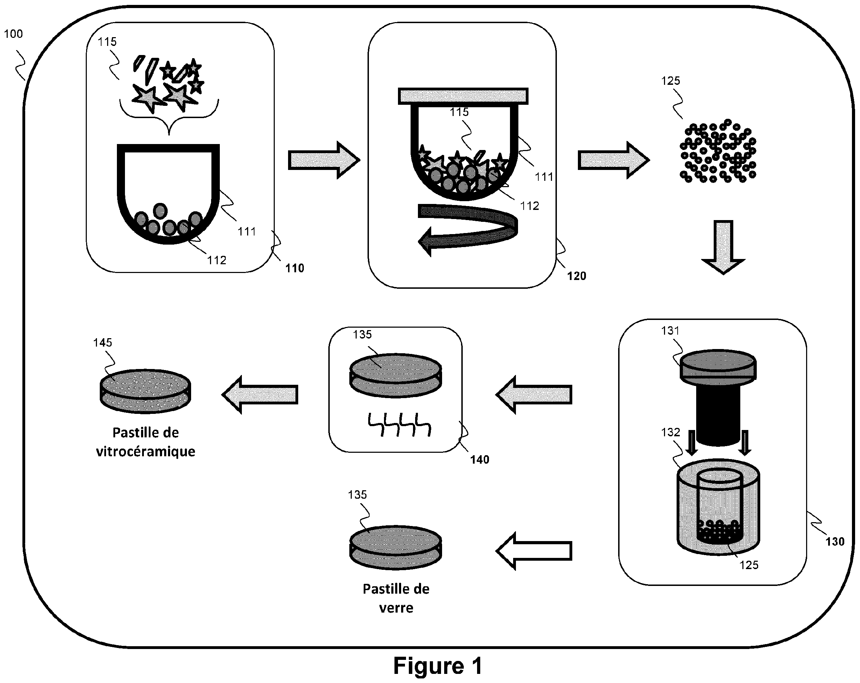

D'autres caractéristiques et avantages de l'invention apparaîtront à la lecture de la description suivante, donnée à titre d'exemple indicatif et non limitatif, et du dessin annexé, dans lequel la figure 1 présente un organigramme d'un mode de réalisation particulier du procédé selon l'invention.

### 6. DESCRIPTION DÉTAILLÉE

On présente, en relation avec la **figure 1****,** un organigramme 100 d'un mode de réalisation particulier du procédé selon l'invention.

Le procédé consiste à synthétiser un matériau vitrocéramique et optiquement transparent à un rayonnement électromagnétique infrarouge, dont la phase d'amorphisation est obtenue par apport d'énergie mécanique.

Dans la suite de la description, on entend par « matériau vitrocéramique» une vitrocéramique à base de chalcogénures possédant une transparence dans le spectre infrarouge.

Dans une étape 110, on introduit un ensemble d'éléments de départ 115 dans un broyeur planétaire à billes à des fins de traitement mécanique. Les éléments de départ 115 constituent les produits élémentaires (sous forme de poudre ou de morceaux massifs) nécessaires à l'obtention d'un matériau vitrocéramique, et comprennent :
- un ou plusieurs élément(s) métallique(s) choisi(s) parmi Ge, As, Sb, Ga, Sn, In, généralement présent avec une teneur variant entre 0 et 35% molaire ; et
- un ou plusieurs élément(s) chalcogénure(s) choisi(s) parmi S, Se, Te, généralement présent avec une teneur variant entre 40 et 90% molaire.

Ces éléments de départ sont introduits en proportion stoechiométrique selon la composition chimique que l'on souhaite obtenir.

Le broyeur planétaire est constitué d'un ou plusieurs bols de broyage 111 en carbure de tungstène, comprenant une pluralité de billes 112 également en carbure de tungstène.

Dans une étape 120, chaque bol de broyage 111 est soumis à deux mouvements de rotation, à savoir : un premier mouvement de rotation exercé sur le bol lui-même dans un sens et un deuxième mouvement de rotation exercé, en sens inverse et à vitesse identique (variant entre 200 et 550 tours.min⁻¹ par exemple), sur un plateau (non illustré sur la figure) supportant le ou les bol(s). Les forces centrifuges résultantes de ces deux mouvements de rotation produisent des effets de chocs et de frottements mécanique, à très haute énergie, des billes 112 entre elles et contre les parois du bol 111, de manière à broyer finement l'ensemble des éléments de départ 115 préalablement introduits dans le bol 111. L'impact mécanique des billes 112 permet, par mécanosynthèse, d'amorphiser le mélange constitué des éléments de départ jusqu'à obtenir une poudre amorphe et homogène 125. En effet, l'énergie mécanique apportée par cette technique transforme progressivement le mélange d'éléments de départ initialement cristallin en une poudre amorphe dont la composition chimique est fonction de la quantité de chaque élément introduit dans le bol 111. Les particules de la poudre amorphe 125 possèdent d'une manière générale une taille inférieure au micromètre. À noter que l'étape d'amorphisation par mécanosynthèse est effectuée à température ambiante.

Il convient de noter que contrairement à un broyage classique, tel que celui réalisé sur une céramique par exemple, le traitement mécanique de l'étape 120 n'a pas pour seul objet de changer la granulométrie des particules (c'est-à-dire modifier la grosseur ou la forme des particules) mais elle a également pour but de modifier la structure cristallographique du mélange d'éléments de départ en passant d'un état cristallin à un état non-cristallin, c'est-à-dire un état amorphe.

Ainsi, au lieu d'élaborer un matériau vitreux à l'aide d'un processus d'amorphisation thermique (technique de l'état de l'art nécessitant un traitement thermique à très haute température suivie d'une trempe), la présente invention repose sur un processus d'amorphisation mécanique réalisé à température ambiante, beaucoup moins consommateur en énergie.

En outre, en s'affranchissant du tube de silice, les compositions chimiques ne sont plus limitées à des matériaux vitreux stables face à la cristallisation et peuvent être étendues à tout type de matériaux vitreux y compris à des matériaux vitreux jusqu'alors impossibles à élaborer ou, à tout le moins, inexploitable par la technique de l'état de l'art précitée.

Enfin, l'amorphisation mécanique n'offre aucune contrainte de taille maximale du matériau vitrocéramique obtenu au final, si ce n'est les dimensions du moule utilisé lors de l'étape 130 détaillée ci-après.

Après formation de la poudre amorphe 125, cette dernière est introduite dans un moule cylindrique 132 de 20 mm de diamètre pour subir, dans une étape 130, un traitement thermique et mécanique de densification à chaud (aussi appelé communément frittage). Cette étape consiste à porter la poudre amorphe 125 à une température T inférieure à la température de fusion T_{f} du ou des élément(s) principal(aux) du mélange tout en la compactant par application d'une contrainte uniaxiale (de l'ordre de quelques tonnes) au moyen d'un vérin hydraulique 131, de manière à provoquer la création de liaisons entre les particules sans pour autant atteindre le point de fusion du ou des élément(s) principal(aux) du mélange. Plus précisément, la poudre amorphe 125 est chauffée, pendant une durée prédéterminée (de l'ordre de quelques heures), dans le moule 132 à une température de densification T_{d} supérieure à la température de transition vitreuse T_{g}, la durée prédéterminée et la température T_{d} étant définies en fonction de la composition chimique du matériau vitrocéramique élaboré.

Par exemple, pour un verre de composition GeSe4, la poudre amorphe est densifiée à chaud pendant environ une heure à une température T_{d} sensiblement égale à 350°C.

La température de transition vitreuse T_{g} peut être déterminée classiquement au moyen d'une analyse thermique différentielle ou analyse DSC (pour « Differential Scanning Calorimetry »).

Il se produit alors une densification de la poudre par compactage à chaud menant à un matériau amorphe malléable dont la forme et les dimensions sont définies par l'empreinte du moule 132. En effet, les propriétés viscoplastiques d'un matériau vitreux lorsqu'il est chauffé au dessus de sa température de transition vitreuse T_{g}, permettent de le mettre aisément en forme dans le moule. Ainsi, il suffit d'adapter les dimensions du moule pour obtenir un matériau vitreux massif selon les dimensions souhaitées.

Après refroidissement, on obtient une pastille de verre 135, de 20mm de diamètre.

L'étape de densification à chaud est ici réalisée par pressage uniaxial. Toutefois, à titre d'alternative, elle peut également être réalisée par pressage isostatique ou encore selon une technique par plasma d'arc ou SPS (pour « Spark Plasma Sintering »).

Dans un mode de réalisation particulier, la pastille de verre 135 subit, dans une étape additionnelle 140, un traitement thermique aux fins de céramisation. Pour ce faire, la pastille de verre 135 est portée, pendant une durée plus ou moins longue (de l'ordre de quelques heures à quelques dizaines d'heures en fonction de la taille et de la quantité de cristaux désirées), à une température de céramisation T_{c} supérieure à la température de transition vitreuse T_{g} mais inférieure à la température de densification T_{d} appliquée préalablement au cours de l'étape 130.

Après refroidissement, on obtient une pastille de vitrocéramique 145, de 20mm de diamètre.

Une vitrocéramique est donc obtenue par traitement thermique spécifique d'un verre de même composition mais exempt de cristaux (pastille de verre 135), c'est-à-dire qui présente un état amorphe (ou non-cristallin), de manière à provoquer leur cristallisation partielle. Un matériau vitreux est considéré comme étant amorphe s'il ne diffracte pas aux rayons X (analyse XRD (pour « X-ray diffraction » en anglais ou « Diffractométrie de rayons X » en français)) et que l'observation au microscope électronique ne révèle pas la présence de cristaux ou de nanocristaux. Une vitrocéramique présente donc une matrice vitreuse (état amorphe) dans laquelle sont répartis de manière homogène des cristaux. Ces cristaux possèdent d'une manière générale une taille inférieure au micromètre.

Par exemple, il est possible d'obtenir un taux de cristallisation (ou volume cristallisé) proche de 60% de cristaux de type Ga₄GeSe₈, à partir d'un verre de composition 80GeSe₂-20Ga₂Se₃, les cristaux de Ga₄GeSe₈ ayant une taille de l'ordre d'une centaine de nanomètres.

Ainsi, en combinant des avantages des céramiques et des avantages des verres, un tel traitement thermique permet d'améliorer les propriétés mécaniques et thermiques du matériau vitreux (robustesse, faible dilatation thermique,...), tout en restant compatible avec une application en infrarouge.

Dans un mode de réalisation en variante, le traitement thermique de céramisation et l'étape 130 de densification à chaud sont réalisés simultanément dans une même étape, à des fins d'optimisation de la durée de synthèse du matériau vitrocéramique. Dans ce cas, la poudre amorphe 125 est portée à la température T_{d} et densifiée à chaud pendant une à deux heures, puis portée à la température T_{c} pendant une durée plus ou moins longue (de l'ordre de quelques heures à quelques dizaines d'heures) en fonction de la taille et de la quantité de cristaux désirées.

De cette façon, une pastille de vitrocéramique est obtenue directement après avoir effectué une étape combinant les processus de densification à chaud et de céramisation.

On présente ci-dessous un exemple de paramètres nécessaires à l'obtention d'un verre de chalcogénures de composition GeSe4, selon les étapes d'amorphisation par mécanosynthèse et de densification à chaud du procédé de l'invention.

Pour procéder à l'étape d'amorphisation par mécanosynthèse, des morceaux de Germanium et Sélénium (produits de départ) sont introduits sous forme métallique et en proportions stoechiométriques dans un bol de broyage de 125 mL. Ainsi, 40g de produits de départ représentent pour cette composition : 7,48g de Germanium (40g x 0,20) et 32,52g de Sélénium (40g x 0,80). Le ratio entre la masse des produits de départ et celle des billes de tungstène est sensiblement égal à 10%. On applique ensuite les paramètres de broyage suivants :
- vitesse de rotation du bol de broyage : 400rpm ;
- bille en tungstène de 20mm de diamètre ;
- cycle de broyage comprenant : 3 minutes dans un sens, puis 3 minutes de pause et 3 minutes dans le sens opposé ;
- durée totale du broyage : 100 heures à température ambiante.

On procède ensuite à l'étape de densification à chaud par compactage uniaxial avec les paramètres suivants :
- 2g de poudre amorphe de GeSe₄ obtenu à l'issue de l'étape d'amorphisation, introduit dans un moule cylindrique de diamètre interne égal à 20mm ;
- pression appliquée par le vérin hydraulique : environ 4MPa (pression exercée par une masse de 1 tonne) ;
- température de densification T_{d} = 350°C ;
- durée totale de la densification à chaud : 1 heure.

Après refroidissement, le matériau obtenu est un verre de composition GeSe4 et se présente sous la forme d'une pastille de 20mm diamètre. Ce matériau peut être incorporé à un dispositif optique, comme par exemple un imageurs thermiques, fonctionnant notamment dans les fenêtres de transparence atmosphérique 3-5*µ*m et 8-13*µ*m. En effet, le verre GeSe4 possède une fenêtre de transparence s'étendant de 700nm à 16*µ*m.

Il convient de noter que les paramètres à appliquer au cours des étapes d'amorphisation par mécanosynthèse et de densification à chaud sont à la portée de l'Homme du Métier. Ils dépendent de la composition du matériau élaboré.

Dans un mode de réalisation particulier, les éléments de départ peuvent comprendre, en sus des éléments métallique(s) et chalcogénure(s) cités plus haut, au moins un des éléments suivants (liste non exhaustive) :
- une terre-rare de type Er, Nd, Dy, Yb, Tm, Gd, Tb, Ce, Pr, Sm, présent avec une teneur comprise entre 0 et 15% molaire ;
- un halogénure d'alcalin de type CsX, KX, NaX, LiX, présent avec une teneur comprise entre 0 et 60% molaire, X étant au moins un atome choisi parmi les halogènes de type Cl, Br, I, F ;
- un métal de type Cu, Pb, Bi, Cd, Cr, Ag, présent avec une teneur comprise entre 0 et 20% molaire.

Ces éléments sont dits « actifs », car ils permettent, lorsqu'ils sont incorporés dans le mélange de départ, de doper le matériau vitrocéramique obtenu après synthèse et de lui conférer des propriétés optiques actives, particulièrement intéressantes pour certaines applications infrarouges, par exemple pour la fabrication de composants optiques à base de sources lasers ou d'amplificateurs optiques.

Les exemples suivants, donnés à titre d'exemples purement illustratifs et non limitatifs, rendent compte de quelques unes des compositions qui sont à la base de vitrocéramiques pouvant être obtenus par le procédé de l'invention, à savoir : GeSe₄, GeS₂, 80GeSe₂-20Ga₂Se₃, 80GeS₂-20Ga₂S₃, 62.5GeS₂-12.5Sb₂S₃-25CsCl, GeS_{1.8}. A noter que pour les compositions GeS₂, 80GeS₂-20Ga₂S₃ et 62.5GeS₂-12.5Sb₂S₃-25CsCl, le diamètre maximal obtenu par la technique de l'état de l'art est de 10mm, alors que le diamètre pouvant être obtenu avec le procédé de l'invention est fonction uniquement de la taille du moule utilisé lors de l'étape de densification à chaud. Pour la composition GeS1.8 (verre peu stable), le diamètre maximal obtenu par la technique de l'état de l'art ne dépasse pas 8mm, alors que le diamètre pouvant être obtenu avec le procédé de l'invention est fonction uniquement de la taille du moule utilisé lors de l'étape de densification à chaud. Ainsi, le processus d'amorphisation par mécanosynthèse permettant de s'affranchir des inconvénients liés à l'amorphisation thermique, des vitrocéramiques à base de chalcogénures de forts diamètres, c'est-à-dire des diamètres supérieurs à 50mm, peuvent être obtenus, donnant ainsi satisfaction à l'ensemble des exigences industrielles dans le cadre des applications infrarouges actuelles.

Les matériaux vitrocéramique obtenus selon le procédé de l'invention peuvent être utilisés dans un dispositif optique fonctionnant dans une gamme de longueurs d'onde infrarouge au moins comprises entre 400nm et 25 *µ*m.

## Revendications

1. Procédé d'obtention d'un matériau vitrocéramique et optiquement transparent à un rayonnement infrarouge,
ledit procédé comprenant les étapes suivantes :
- introduction (110) d'un ensemble d'éléments de départ (115) dans un broyeur planétaire à billes à des fins de traitement mécanique, ledit ensemble d'éléments de départ (115) comprenant au moins un élément métallique et au moins un élément chalcogénure, permettant de former une poudre amorphe (125) ;
- amorphisation (120), par mécanosynthèse, dudit ensemble d'éléments de départ (115) ;
- densification à chaud (130), dans un dispositif de moulage de dimensions prédéterminées, de la poudre amorphe, permettant d'obtenir un matériau vitreux massif ;
- traitement thermique (140), réalisée au cours de ou après ladite étape de densification à chaud, dans laquelle ledit verre est chauffé à une température à laquelle une partie dudit verre est convertie depuis un état amorphe en un état sensiblement cristallin, permettant d'obtenir, après refroidissement, un matériau vitrocéramique massif (145) et optiquement transparent à un rayonnement infrarouge ;
**caractérisé en ce que** ledit broyeur planétaire est constitué d'un ou plusieurs bols de broyage (111) en carbure de tungstène, comprenant une pluralité de billes (112) également en carbure de tungstène.

2. Procédé selon la revendication 1, **caractérisé en ce que** ledit au moins un élément métallique appartient au groupe comprenant : Ge, As, Sb, Ga, Sn, In, avec une teneur comprise entre 0 et 35% molaire,
et **en ce que** ledit au moins un élément chalcogénure appartient au groupe comprenant : S, Se, Te, avec une teneur comprise entre 40 et 90% molaire.

3. Procédé selon l'une quelconque des revendications 1 et 2, **caractérisé en ce que** ledit ensemble d'éléments de départ comprend en outre au moins un élément appartenant au groupe comprenant :
- une terre-rare de type Er, Nd, Dy, Yb, Tm, Gd, Tb, Ce, Pr, Sm, avec une teneur comprise entre 0 et 15% molaire ;
- un halogénure d'alcalin de type CsX, KX, NaX, LiX, avec une teneur comprise entre 0 et 60% molaire, X représentant au moins un atome de Cl, Br, I, F ;
- un métal de type Cu, Pb, Bi, Cd, Cr, Ag, avec une teneur comprise entre 0 et 20% molaire.

4. Procédé selon l'une quelconque des revendications 1 à 3, **caractérisé en ce que** ladite étape de densification à chaud est effectuée par pressage uniaxial.

5. Procédé selon l'une quelconque des revendications 1 à 3, **caractérisé en ce que** ladite étape de densification à chaud est effectuée par pressage isostatique.

6. Procédé selon l'une quelconque des revendications 1 à 3, **caractérisé en ce que** ladite étape de densification à chaud est effectuée selon une technique de frittage par plasma d'arc (SPS).

## Patentansprüche

1. Verfahren zum Herstellen eines glaskeramischen und für eine Infrarotstrahlung optisch transparenten Materials, wobei das Verfahren die folgenden Schritte aufweist:
- Einführen (110) eines Satzes von Ausgangselementen (115) in eine Planetenkugelmühle mit dem Ziel der mechanischen Behandlung, wobei der Satz von Ausgangselementen (115) wenigstens ein metallisches Element und wenigstens ein chalkogenides Element aufweist, die ermöglichen, ein amorphes Pulver (125) zu bilden;
- Amorphisieren (120) des Satzes von Ausgangselementen (115) durch Mechanosynthese;
- Heißverdichten (130), in einer Gießvorrichtung mit vorbestimmten Ausmaßen, des amorphen Pulvers, das ermöglicht, ein festes glasartiges Material zu erhalten;
- Wärmebehandeln (140), umgesetzt während oder nach dem Schritt des Heißverdichtens, in welchem das Glas auf eine Temperatur erhitzt wird, bei welcher ein Teil des Glases von einem amorphen Zustand in einen im Wesentlichen kristallinen Zustand umgewandelt wird, der ermöglicht, nach dem Abkühlen ein massives glaskeramisches (145) und für Infrarotstrahlung optisch transparentes Material zu erhalten;
**dadurch gekennzeichnet, dass** die Planetenmühle aus einem oder mehreren Mahlschalen (111) aus Wolframkarbid, die eine Vielzahl von Kugeln (112), die gleichermaßen aus Wolframkarbid sind, aufweist, gebildet ist.

2. Verfahren nach Anspruch 1, **dadurch gekennzeichnet, dass** das wenigstens eine metallische Element zu der Gruppe gehört, die aufweist: Ge, As, Sb, Ga, Sn, In, mit einem Gehalt zwischen 0 und 35 Mol-%,
und dadurch, dass das wenigstens eine chalkogenide Element zu der Gruppe gehört, die aufweist: S, Se, Te, mit einem Gehalt zwischen 40 und 90 Mol-%.

3. Verfahren nach einem der Ansprüche 1 und 2, **dadurch gekennzeichnet, dass** der Satz von Ausgangselementen weiter wenigstens ein Element aufweist, das zur Gruppe gehört umfassend:
- ein Metall der Seltenen Erden der Art Er, Nd, Dy, Yb, Tm, Gd, Tb, Ce, Pr, Sm, mit einem Gehalt zwischen 0 und 15 Mol-%;
- ein Alkadihalogenid der Art CsX, KX, NaX, LiX, mit einem Gehalt zwischen 0 und 60 Mol-%, wobei X wenigstens eines der Atome Cl, Br, I, F repräsentiert;
- ein Metall der Art Cu, Pb, Bi, Cd, Cr, Ag, mit einem Gehalt zwischen 0 und 20 Mol-%.

4. Verfahren nach einem der Ansprüche 1 bis 3, **dadurch gekennzeichnet, dass** der Schritt des Heißverdichtens durch uniaxialen Druck ausgeführt wird.

5. Verfahren nach einem der Ansprüche 1 bis 3, **dadurch gekennzeichnet, dass** der Schritt des Heißverdichtens durch isostatischen Druck ausgeführt wird.

6. Verfahren nach einem der Ansprüche 1 bis 3, **dadurch gekennzeichnet, dass** der Schritt des Heißverdichtens gemäß einer Spark-Plasma-Sintern (SPS)-Technik ausgeführt wird.

## Claims

1. Method for obtaining a glass-ceramic material that is vitreous and optically transparent to infrared radiation,
said method compring the following steps:
- introduction (110) of a set of initial elements (115) into a planetary ball mill for purposes of mechanical treatment, said set of initial elements (115) comprising at least one metallic element and at least one chalcogenide element, to form an amorphous powder (125);
- amorphization (120), by mechanosynthesis, said set of initial elements (115) ;
- hot densification (130), in a molding device of predetermined dimensions, of the amorphous powder, to obtain a glass;
- thermal treatment (140), performed during or after said step of hot densification, in which said glass is heated to a temperature at which a part of said glass is converted from an amorphous state into an substantially crystalline state, to obtain, after cooling, a glass-ceramic type of massive glass (145) that is vitreous and optically transparent to infrared radiation;
**characterized in that** said planetary ball mill is constituted by one or more grinding jars (111) made of tungsten carbide, comprising a plurality of balls (112) also made of tungsten carbide.

2. Method according to claim 1, **characterized in that** said at least one metal element belongs to the group comprising: Ge, As, Sb, Ga, Sn, In, in a content of 0 to 35 mol %,
and **in that** said at least one chalcogenide element belongs to the group comprising: S, Se, Te, in a content of 40 to 90 mol %.

3. Method according to any one of the claims 1 and 2, **characterized in that** said set of initial elements further comprises at least one element belonging to the group comprising:
- an Er, Nd, Dy, Yb, Tm, Gd, Tb, Ce, Pr, Sm, type of rare earth in a content of 0 to 15 mol %;
- a CsX, KX, NaX, LiX type alkali halide, in a content of 0 to 60 mol %, X representing at least one atom of Cl, Br, I, F;
- a Cu, Pb, Bi, Cd, Cr, Ag type metal, in a content of 0 to 20 mol %.

4. Method according to any one of the claims 1 to 3, **characterized in that** said step of hot densification is performed by uniaxial pressing.

5. Method according to any one of the claims 1 to 3, **characterized in that** said step of hot densification is performed by isostatic pressing.

6. Method according to any one of the claims 1 to 3, **characterized in that** said step of hot densification is performed by a technique of spark plasma sintering (SPS).
